(19) Europäisches Patentamt
European Patent Office
Office européen des brevets

(11) EP 2 236 244 B1

(12) **EUROPEAN PATENT SPECIFICATION**

(45) Date of publication and mention
of the grant of the patent:
**22.01.2014 Bulletin 2014/04**

(51) Int Cl.:
**B24B 13/06** *(2006.01)*  **B24B 9/14** *(2006.01)*
**B24B 49/00** *(2012.01)*

(21) Application number: **09380092.8**

(22) Date of filing: **30.04.2009**

(54) **Finished ophthalmic lens and corresponding methods**

Fertige ophthalmische Linsen und entsprechende Verfahren

Lentille ophtalmique finie et procédés correspondants

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **30.03.2009 ES 200900849**

(43) Date of publication of application:
**06.10.2010 Bulletin 2010/40**

(73) Proprietor: **Indo Internacional, S.A.
08174 Sant Cugat del Vallès Barcelona (ES)**

(72) Inventors:
• **Dürsteler, Lopez, Juan Carlos
08860 Castelldefels (Barcelona) (ES)**

• **Vegas Caballero, Javier
08970 Sant Joan Despí (Barcelona) (ES)**
• **Espínola Estepa, Manuel
08210 Barberà del Vallès (Barcelona) (ES)**

(74) Representative: **Curell Suñol S.L.P.
Via Augusta 21
08006 Barcelona (ES)**

(56) References cited:
**EP-A- 0 576 268     EP-A- 1 847 869
US-A- 5 545 075**

**Description**

Field of the invention

The invention relates to a method of machining an ophthalmic lens having one concave face and one convex face and an outer perimeter, where the outer perimeter has a thickness within a pre-established range. The invention also relates to a method of manufacturing a bevelled finished ophthalmic lens. The invention also relates to a finished ophthalmic lens having one concave face and one convex face and an outer perimeter, where the outer perimeter has a thickness within a pre-established range.

State of the art

Usually ophthalmic lenses are made from semifinished lens blanks. Semifinished lens blanks usually have a circular outer perimeter and comprise one convex face (away from the user's eye) and one concave face (near the user's eye). Semifinished lens blanks are produced by combining particular concave faces and particular convex faces. In order to manufacture an ophthalmic lens that fulfils a particular prescription, an "approximate" semifinished lens blank is used and one of its faces is machined so that the machined lens, called the finished lens, fulfils the pre-established prescription.

Finished lenses are usually large enough for most conventional ophthalmic lenses to "fit" inside them. This is done by means of a bevelling operation, where all the excess material from the finished lens is removed, until said bevelled finished lens is obtained.

Generally, the lenses can be grouped into two large families. On the one hand, negative lenses are those where the curvature radius of the concave surface is less than the curvature radius of the convex surface. Therefore, negative lenses have a thickness that increases as we move away from the optical axis. On the other hand, positive lenses are those where the curvature radius of the concave surface is greater than the curvature radius of the convex surface, or it can even be an opposite sign. In this second case, the thickness of the lens decreases as we move away from the optical eye. Finally it is possible for a lens to be both positive and negative. In fact, progressive lenses can have a negative area and a positive area, whereby the thickness of the lens varies in a complex way from one point to another on the same lens.

By machining the semifinished lens blank so that it fulfils a particular pre-established prescription, there may be problems with the thickness of the outer perimeter of the finished lens. In some cases, this thickness can end up being very big, with the subsequent problem of the lack of material if the thickness of the semifinished lens blank before machining was not sufficient. In other cases, it is possible that the thickness may be excessively fine, and even that it may be null or negative, which means that the perimeter of the finished lens, once it has been machined, is no longer circular, and instead has "recesses". All this hinders the subsequent handling of the finished lens, because conventional methods and machinery have been designed to process finished lenses with a regular outer perimeter.

Moreover, there is a need to manufacture ophthalmic lenses as slim as possible, both to reduce the weight and also for aesthetical reasons. A stage known as the pre-calibrating stage is carried out for this purpose, wherein, by knowing beforehand the perimeter of the particular frame for which the lens is intended, the surface to be machined (which is on one of said concave or convex faces) is positioned with respect to the other face, so that the thickness of the ophthalmic lens is minimised. However, this pre-calibration stage is conditioned by the problems mentioned in the paragraph above.

Document US 5.545.075 discloses a process, as per the preamble of claim 1, for the production of an edged ophthalmic lens wherein an ophthalmic lens which initially is finished on one side and not yet edged according to a prescribed disk shape, i.e. a so-called blank having only one finished effective surface, is produced and the so-called prescription surface is produced in another manufacturing step, if need be, including optimization of the critical thickness. The invented process is distinguished by the combination of the following steps: the prescribed disk shape is stored as a set of data, the position of the second surface (prescription surface) is computed, if need be, including the minimization of the critical thickness from the stored set of data of the prescribed disk shape and the contour of the already finished surface of said blank, subsequently the prescription surface is produced with simultaneous or previous preliminary edging of the blank according to the prescribed disk shape, following production of the prescription surface, the lens is edged, facetted and its perimeter polished in a gripping means utilizing the stored set of data.

US 5.545.075 discloses a lens as per the preamble of claim 7.

In this description and claims, the terminology according to the ISO 13666 standard has been used, which establishes the following definition :

- semifinished blank lens: piece of pre-shaped material that has only one finished optical surface,

- finished lens: lens which has definitive optical surfaces on its two sides; this finished lens can be bevelled (to adjust its perimeter to a particular frame) or not.

In this description and claims, it is considered that the term "finished lens" always relates to the unbevelled lens. For the bevelled lens, the specific term "bevelled finished lens" is used.

Disclosure of the invention

The aim of the invention is to overcome these drawbacks, and propose a new method for pre-calibrating and machining ophthalmic lenses. This purpose is achieved by means of a method as per claim 1.

In fact, this way the pre-calibration can be performed so as to optimise the thickness of the definitive ophthalmic lens; in other words, the one that will be mounted in the frame after the bevelling operation. The pre-calibration should only respect the conditions of the thickness of the lens on its inner point and on the perimeter of the frame, without being influenced by possible conditioning factors arising from the semifinished lens blank, which in the end will not be part of the definitive bevelled lens. A new surface extends from the useful perimeter, i.e.: the transition surface, which is intended to be a joining element between the useful perimeter and the outer perimeter so that the necessary thicknesses are respected. This way, a finished lens is obtained with an outer perimeter that is suitable for subsequent handling, and a central useful area which allows a definitive bevelled lens to be obtained, with an optimally minimised thickness as it is individualised, because it takes into account the frame on which the definitive lens will be mounted.

These stages of the method, which detail the inventive way of performing the lens pre-calibration stage, are followed by the normal machining stage performed on the surface to be machined.

Therefore, as can be seen, the new method allows "double optimization": on the one hand, the thickness of the lens is optimised (i.e. the definitive lens, after bevelling ) and, on the other hand, the thickness and geometry of the finished lens is optimised, so that it is possible to handle and process it adequately, while considering the frame on which the lens is intended to be mounted.

Preferably in stage [d] an outer perimeter is obtained which , apart from maintaining its thickness within the pre-established range, minimises the curvature variation in an angular direction. In fact, the thickness of the outer perimeter is preferably constant, but this cannot be obtained in every case or, at least it is not advisable to force it because other advantageous surface characteristics are lost. Therefore, the only input noted is a pre-established thickness range, where the maximum value is preferably the thickness value of the ophthalmic lens predetermined before machining, and the minimum value is preferably 0.3 mm. Values below this minimum value cause problems in the subsequent handling and processing of the lens, for example, with polishing cloths. However, as mentioned previously, it is advantageous to minimise the curvature variations in the angular direction; in other words, the thickness variations of the outer perimeter.

Advantageously stage [d] specifies the minimum curvature radius of the cutting tools that are used to machine the transition surface, and defines the transition surface so that it has a main minimum curvature radius on all points, which is greater than the minimum curvature radius of the cutting tools. In fact, given that it is necessary for the cutting tool to have a smaller curvature radius than the minimum curvature of the surface that is being machined, it is advantageous to already bear this in mind during the design stage of the transition surface.

The method according to the invention can be used advantageously both when the central area is a positive lens (as the thickness of the central area can be minimised, only making sure that the thickness on the transition perimeter fulfils particular minimum thickness requirements, and without worrying about the outer perimeter of the finished lens) and when the central area is a negative lens (without worrying about the outer perimeter of the finished lens which, in cases of severe short-sightedness, could end up having to be much greater than the outer thickness of the original semifinished lens blank). Logically the method is particularly interesting in the case of progressive lens, where positive and negative areas can coexist.

The invention is also aimed at a method of manufacturing a finished, bevelled ophthalmic lens **characterized in that** it comprises a method of machining a lens according to the invention and, additionally, it comprises a bevelling stage along the useful perimeter, thus obtaining a bevelled lens, so that the bevelled lens is shaped completely from the central useful area.

The aim of the invention is also a finished ophthalmic lens having one concave face and one convex face and an outer perimeter, where the outer perimeter has a thickness within a pre-established range, **characterized in that**: [a] it has a central useful area wherein the concave face and the convex face are such that they fulfil a particular, pre-established ophthalmic prescription and where one of said concave and convex faces defines a machined surface, where the central useful area has a useful perimeter that coincides with the perimeter of a particular, pre-established frame, and [b] it has an outer transition area that joins the useful perimeter of the central useful area to the outer perimeter, where the transition area comprises a transition surface that extends as a continuation of the machined surface as far as the outer perimeter, and where the transition surface is continuous and its derivative is continuous on all points, including the joining line between the transition surface and the machined surface. In fact, this finished ophthalmic lens has, on the one hand, a central useful area from which an ophthalmic lens with an optimised thickness can be bevelled, while the finished ophthalmic lens has an outer perimeter that is also optimised for handling.

The invention is also used advantageously both when the central area is a positive lens and when the central area is a negative lens. Also, as mentioned before, it is also advantageous when the lens is a progressive lens.

Brief description of the drawings

Other advantages and characteristics of the invention will be appreciated from the following description, wherein, in a non-limiting way, some preferable embodiments of the invention are described, with reference to the accompanying drawings, in which :

Fig. 1 is a finished lens according to the invention.

Fig. 2 is a flat curve that defines the perimeter of the frame and the thickness of the associated edge.

Fig. 3 is the central useful area of a finished lens according to the invention.

Fig. 4 is a cross-section of a finished lens according to the invention, where the central useful area is negative.

Fig. 5 is a cross-section of a finished lens according to the invention, wherein the central useful area is positive.

Fig. 6 is a finished lens according to the invention with a dotted line showing the shape of the contact points.

Fig. 7 is a flow diagram of a method according to the invention.

Fig. 8A and 8B are a graphic representation of the distortion caused in one grid, by a conventionally finished progressive lens and a progressive finished lens according to the invention.

Detailed description of some embodiments of the invention

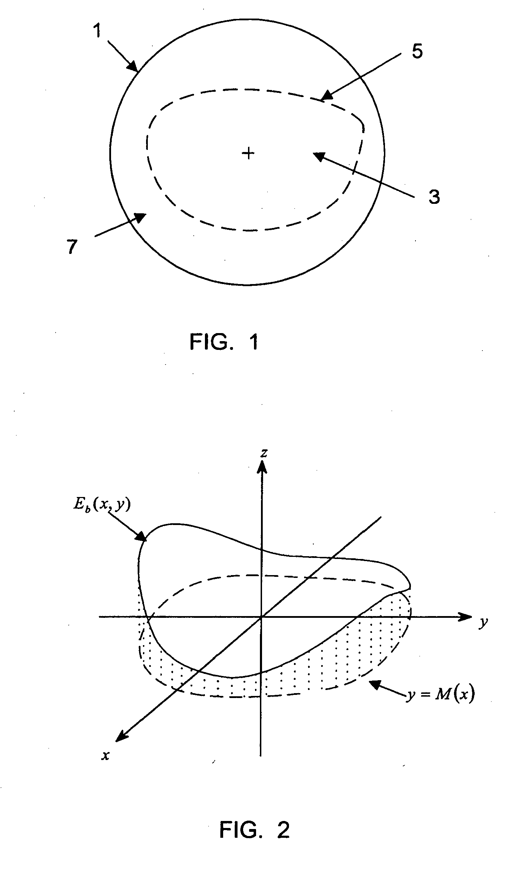

Figure 1 shows a finished ophthalmic lens according to the invention. The ophthalmic lens has an outer perimeter 1, normally of a standardised value, such as for example 65 mm in diameter. Inside there is a central useful area 3 defined by a useful perimeter 5 that coincides with the perimeter of a particular, pre-established frame; in other words, a frame that has been chosen by the user and in which the lens that is being manufactured has to be housed. Between useful perimeter 5 and outer perimeter 1 there extends a transition area 7, which is the area that will be removed during the bevelling operation. Therefore, transition area 7 is a non-useful area from the optical point of view.

In other words, the shape of the frame determines a central useful area 3 of the definitive lens that fulfils the optical properties the lens must have in order to adequately correct the user's vision. In this respect, when it says that central useful area 3 fulfils a particular, pre-established ophthalmic prescription, it must be understood that it fulfils it, just as this expression is understood conventionally. So, for example, a progressive lens has an area of far vision, an area of near vision and an intermediate passage that strictly fulfil the user's needs, and a wider area where the appearance of aberrations is inevitable (particularly, astigmatism). Nevertheless, it is considered that the lens, overall, fulfils a particular ophthalmic prescription, corresponds to said prescription, or is suitable for said prescription.

The area of the finished lens that remains outside the contour of the frame becomes an optically non-useful area, where a surface will be defined that will not have particular optical properties, but will have geometrical properties, which will make it possible to join the edge of central useful area 3 defined by the frame (in other words, useful perimeter 5) to the edge of the finished lens, that is, outer perimeter 1.

The semifinished ophthalmic lens blank has one convex face and one concave face (which is the face that remains nearest the user's eye). In the examples described below the concave face is the one with the surface to be machined, although the invention could be applied conceptually in the same way if the surface to be machined were the convex face.

To carry out the method according to the invention, we start with a lens that has already been optimised according to assembly, prescription and frame parameters, so that there is a frame contour usually defined by a flat curve $y = M(x)$ (it can also be described in polar co-ordinates $r = M(\theta)$) to which an edge thickness $E_b = E_b(x,y)$ is associated, as can be seen in Figure 2.

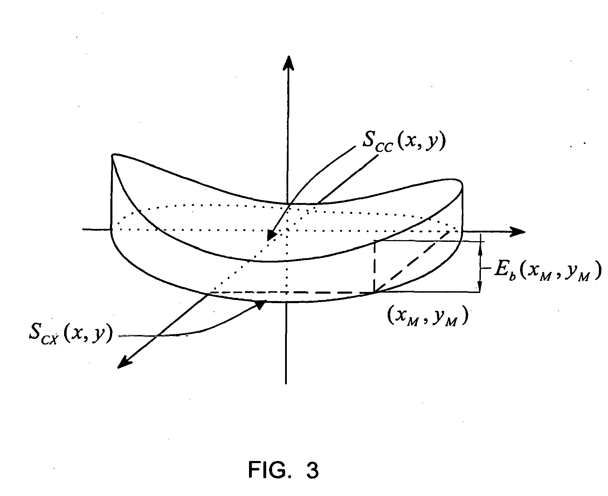

The lens (see Figure 3) is determined by two surfaces, the concave one and the convex one. The convex surface ($S_{CX} = S_{CX}(x,y)$) is pre-established by the convex face of the semifinished lens blank to be machined, while the concave surface ($S_{CC} = S_{CC}(x,y)$) is designed so that the lens system made up of the two surfaces has the suitable prescription. This concave surface is the one that has been called the surface to be machined. It is fulfilled that the difference between the contour points of the frame (on useful perimeter 5) between the two surfaces, is the above-mentioned edge thickness:

$$S_{CC}(x_M, y_M) - S_{CX}(x_M, y_M) = E_b(x_M, y_M) \qquad (x_M, y_M) \in y = M(x)$$

Once central useful area 3 of the lens is completely defined by its contour or useful perimeter 5 and its surfaces, a surface (transition surface) has to be designed that joins the edge of the surface to be machined to the edge of the finished lens of thickness $E_b^{ST} = E_b^{ST}(x_L, y_L)$ (that is, outer perimeter 1) where the points ($x_L, y_L$) belong to the flat curve that defines the limits of the semifinished lens blank $y = M_{ST}(x)$ (normally circumference). This thickness does not have to be the thickness of the predefined edge, as it can be modified.

The transition surface, $T = T(x,y)$ has to fulfil particular continuity requirements so that the numeric control machine can cut the lens. In this respect it is advantageous that the transition surface fulfils at least one continuity $C^1$, in other words, that it is continuous and also that its first derivative is continuous. Therefore, for each point on the contour of the frame ($x_M, y_M$), where the surface to be machined and the transition surface connect, the following is fulfilled:

$$S_{CC}(x_M, y_M) = S_{CX}(x_M, y_M) + E_b(x_M, y_M) = T(x_M, y_M)$$
$$S'_{cc}(x_M, y_M) = T'(x_M, y_M)$$

with $(x_M, y_M) \in y = M(x)$

$$S'_{cc}(x_M, y_M) = T'(x_M, y_M)$$

with

$$(x_M, y_M) \in y = M(x)$$

Another contour condition that the new transition surface has to fulfil is that on the edge of the lens on the concave surface it has to coincide with the desired thickness of the finished lens, in other words, with the thickness of the outer perimeter:

$$T(x_L, y_L) = S_{CC}(x_L, y_L) + E_B^{ST}(x_L, y_L)$$

with

$$(x_L, y_L) \in y = M_{ST}(x)$$

The thickness of the outer perimeter of the finished lens can be fixed in several ways. Preferably it is limited within "absolute" maximum and minimum values for practical reasons. Moreover, it is recommendable that the maximum value is not greater than the thickness value of the original semifinished lens blank because, otherwise, there would be the problem of the lack of material for obtaining the desired thickness. Furthermore, it is recommendable that the lens has a certain thickness so that it can be handled subsequently. This minimum thickness is preferably greater or equivalent to 0.3 mm, because if the thickness is less there tend to be problems with the polishing cloths. Apart from these "absolute" maximum and minimum values, in each case, it may be recommendable to set other maximum and minimum values according to other conditions. So, generally, it is recommendable that the thickness be as constant as possible. Moreover, as will be seen later, the method of calculating the transition surface and the method of machining the transition surface (particularly the radii of the machining tools) can impose other limits.

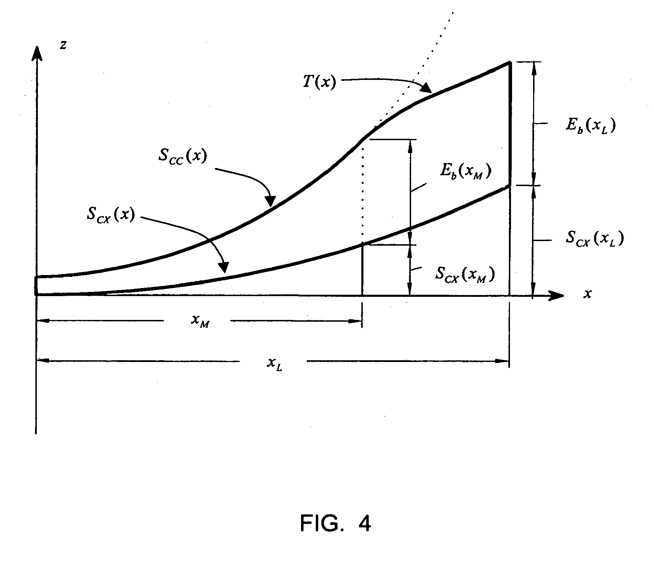

Figure 4 shows a cross-section of a lens according to the invention, in particular, a negative lens. The two-dimensional profile of the lens can be seen, for a fixed "y" co-ordinate, where the pre-calibrating surfaces can be observed. On the one hand, the convex face of the lens corresponds to the surface of the semifinished lens blank. On the concave face of the lens we can see the surface corresponding to central useful area 3 (in other words, the surface to be machined) up to the limit co-ordinate of the frame and afterwards the transition surface up to the edge of the finished lens.

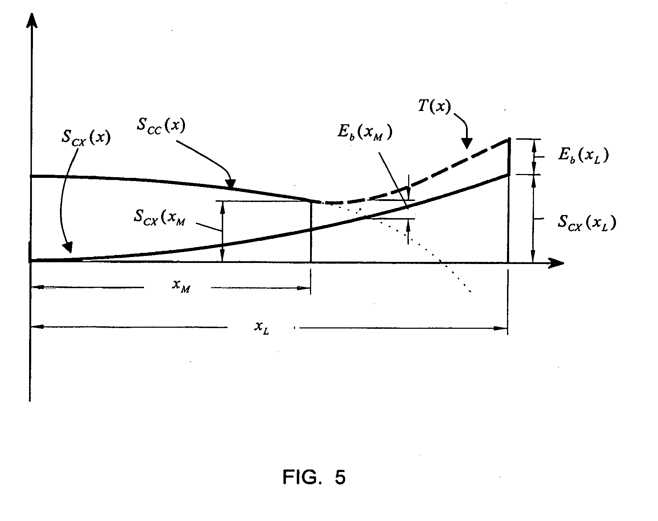

For its part, Figure 5 is equivalent to Figure 4, but shows a positive lens.

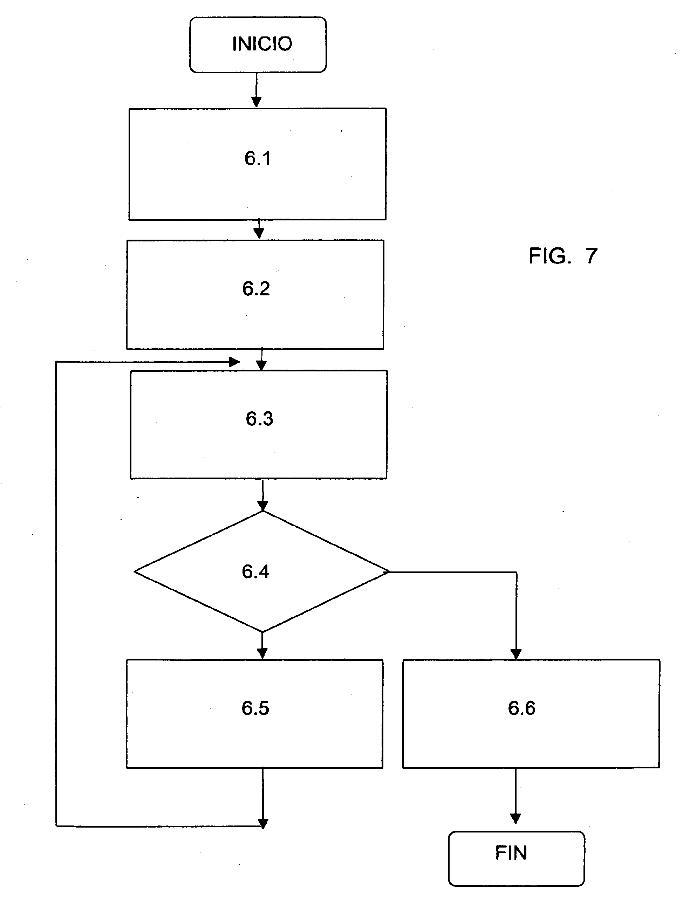

A description is provided below of an example of a method of machining an ophthalmic lens according to the invention, represented schematically as a flow diagram in Figure 7:

In the case of a positive lens, like the one shown in Figure 5:

1 - First of all the data of the frame perimeter and the two faces (concave and convex) of the ophthalmic lens, which must be mounted in the frame, are obtained; in other words, the data on central useful area 3 and useful perimeter 5. These data will already include the results of a pre-calibration which makes it possible to optimise the thickness of central useful area 3. (Reference 6.1).

2 - A safety surface is defined, parallel to the convex face and separated therefrom by a particular safety thickness. This safety thickness is a minimum thickness which makes it possible to guarantee that negative thicknesses (in other words, holes) are not formed. Preferably this safety thickness is less than the minimum value of the range pre-established for the thickness of outer perimeter 1. This way, it is possible to maximally optimise the thickness reduction in central useful area 3. (Reference 6.2).

3 - The transition surface is defined, which extends between the surface to be machined and outer perimeter 1, a series of curves are drawn that propagate radially from useful perimeter 5 to outer perimeter 1. For every curve, the following is taken into account:

3.1 - The initial point of the curve coincides with the end point of the surface to be machined, and the joining point must be continuous and with a continuous derivative.

3.2 - From this initial point a pre-established curve is drawn, which preferably is a circumference arch but which could be any other type of pre-established curve (parabola, cubic curve, etc.). This curve must be tangential to the safety surface at a particular contact point. To this end the radius of the circumference is calculated which makes it possible to fulfil this condition, called contact radius . (Reference 6.3). Three cases may result from this :

3.2.1 - No contact radius is obtained that fulfils the pre-established condition. This means that at no event can the curve drawn cut the safety surface. In this case the curvature radius is determined by taking into account other conditioning factors that will be discussed later.

3.2.2 - The contact radius that fulfils the pre-established condition has the consequence that the tangent point is outside outer perimeter 1. This also means that in reality, given that the finished lens ends on its outer perimeter 1, the curve drawn will not cut the safety surface at any time. In this case, the curvature radius can also be determined by taking into account other conditioning factors that will be discussed later.

3.2.3 - The contact radius that fulfils the pre-established condition has the consequence that the contact point is between useful perimeter 5 and outer perimeter 1. In this case the contact point acts as an initial point for a second curve that will extend between the contact point and outer perimeter 1.

3.3 - Each second curve is calculated following the same steps as in point 3.2 above, taking the contact points obtained as the initial point. (Reference 6.5). This iterative process ends when all the points in case 3.2.3 above have been treated. (Reference 6.4). These second curves must also fulfil the following requirements:

3.3.1 - Its curvature radius is less than the contact radius obtained.

3.3.2 - Its curvature radius must be greater than the radius curvature of the smallest tool envisaged in the machining process.

3.3.3 - It is C1; in other words, continuous and with a continuous derivative.

3.3.4 - The thickness of transition area 7 is on all points greater or equivalent to the safety thickness.

4 - When all the contact points of all the curves are outside outer perimeter 1 (case 3.2.2 above) or do not exist (case 3.2.1 above), then the earlier iterative process is finished and a curve is calculated that optimises the thickness of outer perimeter 1, (Reference 6.6), while also fulfilling the following conditions:

4.1 - Its curvature radius is less (or equivalent ) than the contact radius obtained.
4.2 - Its curvature radius must be greater than the curvature radius of the smallest tool envisaged in the machining process.
4.3 - It is C1.
4.4 - The thickness of transition area 7 is on all points greater or equivalent to the safety thickness.
4.5 - In order to determine the curvature radius it is important to bear in mind that the thickness of the outer perimeter must be included within some minimum and maximum values ($E_{bmin}$ y $E_{bmax}$). The value of $E_{bmin}$ will be the one obtained when the curvature radius is the contact radius, while value $E_{bmax}$ will be the one that is limited by the radius of the machining tool. Logically, $E_{bmin}$ and $E_{bmax}$ must always be within a range of absolute maximum and minimum values. Moreover, it is recommendable that the thickness be constant (or as constant as possible). To this end, a possible strategy is to make the thickness of one given point on the outer perimeter equivalent to the adjacent point, in an angular direction, providing this does not mean going beyond the limits indicated above. It is also important to take into account that the outer perimeter must fulfil basic continuity and manufacturing requirements (in other words, that the main minimum curvature radius is greater than the curvature radius of the smallest tool to be used). So, once the thickness has been set for one given point, the curvature radius of the second curve can be calculated.

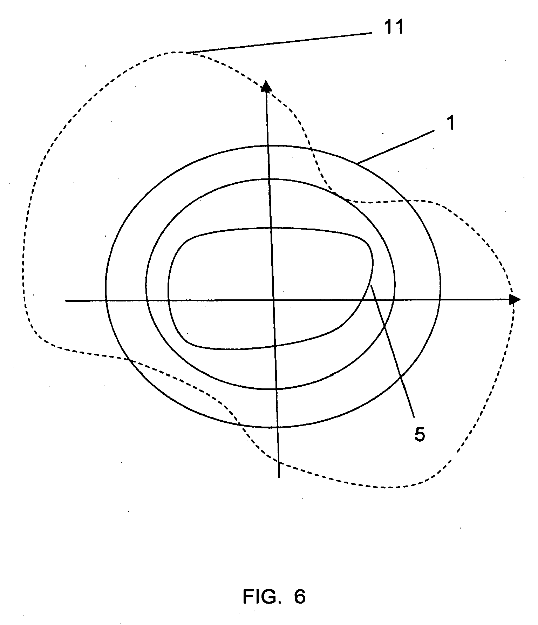

Figure 6 shows schematically a semifinished lens blank with useful perimeter 5 and outer perimeter 1, where the dotted line shows the contour of the points of contact 11.

Although the example described has been based on a positive lens, it can be equally be applied conceptually for a negative lens (such as the one in Figure 4, or even for lenses that combine positive and negative areas. In fact, this invention is applied particularly advantageously to progressive lenses.

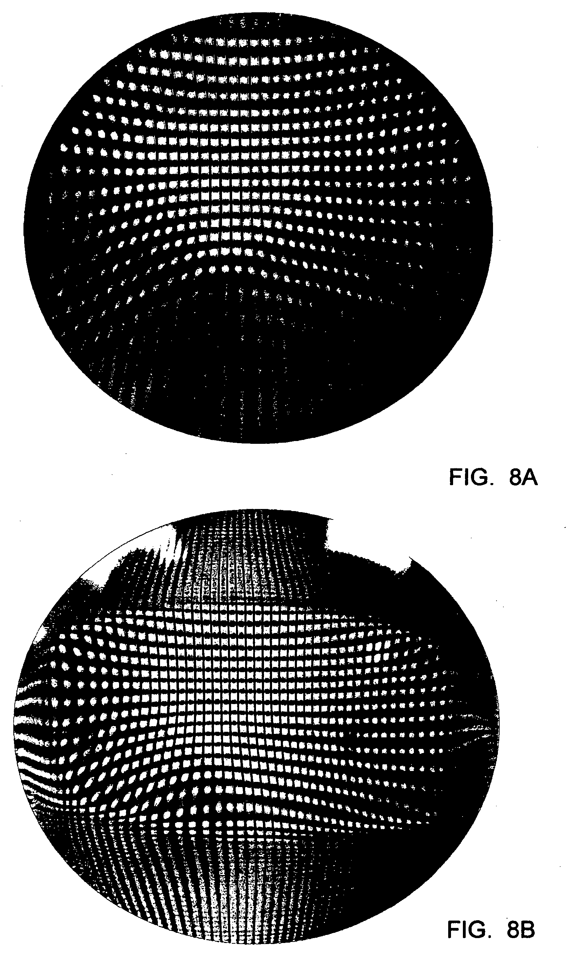

Figures 8A and 8B show some photographs that feature, respectively, a progressive finished conventional ophthalmic lens and a progressive finished ophthalmic lens according to the invention, arranged on a grid. In the distortion produced on the grid, the differences between both finished lenses can be clearly seen. In particular, in the finished lens according to the invention, the existence of two areas (the central useful area and the transition area) can be seen, and the "thumbprint" of the useful perimeter is shown, that is, of the perimeter of the frame wherein it is envisaged to mount the lens once it is bevelled.

## Claims

1. Method of machining an ophthalmic lens having one concave face and one convex face and an outer perimeter (1), where said outer perimeter (1) has a thickness within a pre-established range, comprising the following stages:

[a] defining a central useful area (3) with a useful perimeter (5) that coincides with the perimeter of a particular pre-established frame,
[b] defining a surface to be machined on one of said concave and convex faces, so that said concave and convex face, together, are such that they fulfil a particular pre-established ophthalmic prescription in said central useful area (3),
[c] positioning said surface to be machined, arranged on one of said concave and convex faces, with respect to the other of said concave and convex faces, so that said surface to be machined and its position with respect to the other of said concave and convex faces determines the thickness of the lens along said useful perimeter (5) in said central useful area (3),
[e] machining said surface to be machined, **characterized by**
[d] defining a transition area (7) with a transition surface that extends between said useful perimeter (5) of said central useful area (3) and said outer perimeter (1), where the transition surface extends like a continuation of the surface to be machined as far as said outer perimeter (1), and wherein said transition surface is continuous and its derivative is continuous on all points, including the joining line between said transition surface and said surface to be machined, followed by stage [e].

2. Method according to claims 1, **characterized in that** in said stage [d] an outer perimeter (1) is obtained which, apart from maintaining its thickness within the pre-established range, minimises the curvature variation in an angular direction

3. Method according to claims 1 or 2, **characterized in that** in said stage [d] specifies the minimum curvature radius of the cutting tools that are used to machine said transition surface, and defines said transition surface so that it has a main minimum curvature radius on all its points, which is greater than the minimum curvature radius of said cutting tools.

4. Method according to any of the claims 1 to 3, **characterized in that** said central area is a positive lens.

5. Method according to any of the claims 1 to 4, **characterized in that** said central area is a negative lens.

6. Method of manufacturing a finished bevelled ophthalmic lens **characterized in that** it comprises a method of machining a lens according to any of the claims 1 to 5, and, additionally, it comprises a bevelling stage along said useful perimeter (5) obtaining a bevelled lens, whereby said bevelled lens is shaped completely from said central useful area (3).

7. Finished ophthalmic lens having one concave face and one convex face and an outer perimeter (1), wherein said outer perimeter (1) has a thickness within a pre-established range, [a] a central useful area (3) wherein said concave face and said convex face are such that they fulfil a particular pre-established ophthalmic prescription and wherein one of said concave and convex faces defines a machined surface, wherein said central useful area (3) has a useful perimeter (5) that coincides with the perimeter of a particular, pre-established frame, and [b] has an outer transition area that joins said useful perimeter (5) of said central useful area (3) to said outer perimeter (1), **characterized in that**: said transition area (7) comprises a transition surface that extends as a continuation of said machined surface and as far as said outer perimeter (1), and wherein said transition surface is continuous and its derivative is continuous on all points, including the joining line between said transition surface and said machined surface.

8. Lens according to claim 7, **characterized in that** said central area is a positive lens.

9. Lens according to claim 7, **characterized in that** said central area is a negative lens.

10. Lens according to any of the claims 7 to 9, **characterized in that** said central area is a progressive lens.

**Patentansprüche**

1. Verfahren zur Bearbeitung einer ophthalmischen Linse mit einer konkaven Seite und einer konvexen Seite und einem Außenumfang (1), wobei der Außenumfang (1) eine Dicke in einem vorgegebenen Bereich aufweist, wobei das Verfahren die folgenden Schritte umfasst:

[a] Definieren eines zentralen nutzbaren Bereichs (3) mit einem nutzbaren Umfang (5), der mit dem Umfang einer vorgegebenen speziellen Fassung zusammenfällt,
[b] Definieren einer zu bearbeitenden Oberfläche auf der konkaven oder konvexen Seite so, dass die konkave und die konvexe Seite zusammen derart ausgebildet sind, dass sie eine spezielle vorgeschriebene ophthalmische Vorgabe in dem zentralen nutzbaren Bereich (3) erfüllen,
[c] Positionieren der zu bearbeitenden Oberfläche, die auf der konkaven oder konvexen Seite angeordnet ist, zur anderen konkaven oder konvexen Seite so, dass die zu bearbeitende Oberfläche und ihre Position zur anderen konvaven oder konvexen Seite die Dicke der Linse entlang des nutzbaren Umfangs (5) in dem zentralen nutzbaren Bereich (3) bestimmt,
[e] Bearbeiten der zu bearbeitenden Oberfläche,
**gekennzeichnet durch**
[d] Definieren eines Übergangsbereichs (7) mit einer Übergangsfläche, die sich zwischen dem nutzbaren Umfang (5) des zentralen nutzbaren Bereichs (3) und dem Außenumfang (1) erstreckt, wobei die Übergangsfläche sich wie eine Fortsetzung der zu bearbeitenden Oberfläche bis zu dem Außenumfang (1) erstreckt, und wobei die Übergangsfläche kontinuierlich ausgebildet ist und ihre Ableitung an allen Punkten kontinuierlich ist, einschließlich der Verbindungslinie zwischen der Übergangsfläche und der zu bearbeitenden Oberfläche, gefolgt von Schritt [e].

2. Verfahren nach Anspruch 1, **dadurch gekennzeichnet, dass** im Schritt [d] ein Außenumfang (1) erhalten wird, der, außer einer Bearbeitung seiner Dicke in dem vorgegebenen Bereich, die Krümmungsabweichung in einer Winkelrichtung minimiert.

3. Verfahren nach Anspruch 1 oder 2, **dadurch gekennzeichnet, dass** im Schritt [d] der minimale Krümmungsradius der Schneidwerkzeuge, die zum Bearbeiten der Übergangsfläche verwendet werden, spezifiziert wird und die Übergangsfläche so definiert wird, dass sie an allen ihren Punkten einen minimalen Hauptkrümmungsradius aufweist, der größer ist als der minimale Krümmungsradius der Schneidwerkzeuge.

4. Verfahren nach einem der Ansprüche 1 bis 3, **dadurch gekennzeichnet, dass** der zentrale Bereich als positive Linse ausgebildet wird.

5. Verfahren nach einem der Ansprüche 1 bis 4, **dadurch gekennzeichnet, dass** der zentrale Bereich als negative Linse ausgebildet wird.

6. Verfahren zur Herstellung einer fertigen kantenbearbeiteten ophthalmischen Linse, **dadurch gekennzeichnet, dass** es ein Verfahren zur Bearbeitung einer Linse nach einem der Ansprüche 1 bis 5 umfasst und außerdem einen Schritt zum Kantenbearbeiten entlang des nutzbaren Umfangs (5) umfasst, wobei eine kantenbearbeitete Linse erhalten wird, und wodurch die kantenbearbeitete Linse vollständig aus dem zentralen nutzbaren Bereich (3) gebildet wird.

7. Fertige ophthalmische Linse mit einer konkaven Seite und einer konvexen Seite und einem Außenumfang (1), wobei der Außenumfang (1) eine Dicke in einem vorgegebenen Bereich aufweist, [a] einem zentralen nutzbaren Bereich (3), in dem die konkave Seite und die konvexe Seite derart ausgebildet sind, dass sie eine spezielle vorgeschriebene ophthalmische Vorgabe erfüllen, und wobei die konkave oder konvexe Seite eine bearbeitete Oberfläche definiert, wobei der zentrale nutzbare Bereich (3) einen nutzbaren Umfang (5) aufweist, der mit dem Umfang einer vorgegebenen speziellen Fassung zusammenfällt, und [b] einen äußeren Übergangsbereich aufweist, der den nutzbaren Umfang (5) des zentralen nutzbaren Bereichs (3) an den Außenumfang (1) anfügt, **dadurch gekennzeichnet, dass** der Übergangsbereich (7) eine Übergangsfläche umfasst, die sich als Fortsetzung der bearbeiteten Oberfläche bis zum Außenumfang (1) erstreckt, und wobei die Übergangsfläche kontinuierlich ausgebildet ist und ihre Ableitung an allen Punkten kontinuierlich ist, einschließlich der Verbindungslinie zwischen der Übergangsfläche und der bearbeiteten Oberfläche.

8. Linse nach Anspruch 7, **dadurch gekennzeichnet, dass** der zentrale Bereich als positive Linse ausgebildet ist.

9. Linse nach Anspruch 7, **dadurch gekennzeichnet, dass** der zentrale Bereich als negative Linse ausgebildet ist.

10. Linse nach einem der Ansprüche 7 bis 9, **dadurch gekennzeichnet, dass** der zentrale Bereich als progressive Linse ausgebildet ist.

**Revendications**

1. Procédé d'usinage d'une lentille ophtalmique possédant une face concave et une face convexe et un périmètre extérieur (1), où ledit périmètre extérieur (1) a une épaisseur comprise dans une plage préétablie, comprenant les étapes suivantes

   [a] délimiter une région utile centrale (3) ayant un périmètre utile (5) qui coïncide avec le périmètre d'un cadre préétabli particulier,
   [b] délimiter une surface à usiner sur une face parmi ladite face concave et ladite face convexe, de sorte que ladite face concave et ladite face convexe, ensemble, soient telles qu'elles satisfont une prescription ophtalmique préétablie particulière dans ladite région utile centrale (3),
   [c] positionner ladite surface à usiner, agencée sur une face parmi ladite face concave et ladite face convexe, par rapport à l'autre face parmi ladite face concave et ladite face convexe, de sorte que ladite surface à usiner et sa position par rapport à l'autre face parmi ladite face concave et ladite face convexe déterminent l'épaisseur de la lentille le long dudit périmètre utile (5) dans ladite région utile centrale (3),
   [e] usiner ladite surface à usiner, **caractérisé par**
   [d] délimiter une région de transition (7) ayant une surface de transition qui s'étend entre ledit périmètre utile (5) de ladite région utile centrale (3) et ledit périmètre extérieur (1), où la surface de transition s'étend comme une continuation de la surface à usiner jusqu'audit périmètre extérieur (1), et dans lequel ladite surface de transition est continue et sa dérivée est continue sur tous les points, y compris la ligne de liaison entre ladite surface de transition et ladite surface à usiner, suivie de l'étape [e].

**2.** Procédé selon la revendication 1, **caractérisé en ce que**, à ladite étape [d], un périmètre extérieur (1) est obtenu, lequel, en plus de maintenir son épaisseur dans la plage préétablie, réduit au minimum la variation de courbure dans une direction angulaire.

**3.** Procédé selon la revendication 1 ou 2, **caractérisé en ce que**, à ladite étape [d], il spécifie le rayon de courbure minimum des outils de coupe qui sont utilisés pour usiner ladite surface de transition, et délimite ladite surface de transition de sorte qu'elle présente un rayon de courbure minimum principal sur tous ses points, qui est supérieur au rayon de courbure minimum desdits outils de coupe.

**4.** Procédé selon l'une quelconque des revendications 1 à 3, **caractérisé en ce que** ladite région centrale est une lentille positive.

**5.** Procédé selon l'une quelconque des revendications 1 à 4, **caractérisé en ce que** ladite région centrale est une lentille négative.

**6.** Procédé de fabrication d'une lentille ophtalmique biseautée finie **caractérisé en ce qu'**il comprend un procédé consistant à usiner une lentille selon l'une quelconque des revendications 1 à 5, et **en ce qu'**il comprend en plus une étape de biseautage le long dudit périmètre utile (5) obtenant une lentille biseautée, moyennant quoi ladite lentille biseautée est complètement façonnée à partir de ladite région utile centrale (3).

**7.** Lentille ophtalmique finie possédant une face concave et une face convexe et un périmètre extérieur (1), dans laquelle ledit périmètre extérieur (1) a une épaisseur comprise dans une plage préétablie, [a] une région utile centrale (3) dans laquelle ladite face concave et ladite face convexe sont telles qu'elles satisfont une prescription ophtalmique préétablie particulière et dans laquelle une face parmi ladite face concave et ladite face convexe délimite une surface usinée, dans laquelle ladite région utile centrale (3) a un périmètre utile (5) qui coïncide avec le périmètre d'un cadre préétabli particulier, et [b] a une région de transition extérieure qui relie ledit périmètre utile (5) de ladite région utile centrale (3) audit périmètre extérieur (1), **caractérisée en ce que** ladite région de transition (7) comprend une surface de transition qui s'étend comme une continuation de ladite surface usinée et jusqu'audit périmètre extérieur (1), et dans laquelle ladite surface de transition est continue et sa dérivée est continue sur tous les points, y compris la ligne de liaison entre ladite surface de transition et ladite surface usinée.

**8.** Lentille selon la revendication 7, **caractérisée en ce que** ladite région centrale est une lentille positive.

**9.** Lentille selon la revendication 7, **caractérisée en ce que** ladite région centrale est une lentille négative.

**10.** Lentille selon l'une quelconque des revendications 7 à 9, **caractérisée en ce que** ladite région centrale est une lentille progressive.

FIG. 1

FIG. 2

FIG. 3

FIG. 4

FIG. 5

FIG. 6

FIG. 7

FIG. 8A

FIG. 8B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5545075 A